# FASCICULE DE BREVET EUROPEEN

(11) **EP 2 895 412 B1**
(45) Date de publication et mention de la délivrance du brevet: **02.11.2016**
(21) Numéro de dépôt: 13773302.8
(22) Date de dépôt: 16.09.2013
(51) Int. Cl.: B65G 61/00

(54) **PROCÉDÉ DE PALETTISATION ET DISPOSITIF DE MISE EN OEUVRE DU PROCÉDÉ**
PALETTIERVERFAHREN UND VORRICHTUNG ZUR DURCHFÜHRUNG DES VERFAHRENS
PALLETISING METHOD AND DEVICE FOR IMPLEMENTING THE METHOD

(30) Priorité: 17.09.2012 FR 1258705
(43) Date de publication de la demande: 22.07.2015
(73) Titulaire: Materials Technologies, 49110 Le-Pin-en-Mauges (FR)
(72) Inventeur: COUDAMY, Gérard, F-87000 Limoges (FR); JAUBERT, Yann, F-78350 Jouy en Josas (FR)
(74) Mandataire: Petit, Maxime
(86) Numéro de dépôt international: PCT/FR2013/052114
(87) Numéro de publication internationale: WO 2014/041318

(56) Documents cités:
- EP-A2- 1 428 634
- EP-A2- 2 392 980
- WO-A2-2008/021398
- WO-A2-2011/031523
- FR-A1- 2 523 934
- US-B1- 6 721 444
- US-B1- 7 266 422

## Description

La présente invention concerne un procédé de palettisation et un dispositif de mise en oeuvre du procédé.

Le procédé selon l'invention est en particulier destiné à être utilisé dans les centres de distribution dans le cadre de la messagerie dans le sens d'acheminement rapide de colis et de marchandises, ou autres.

Le procédé concerne en premier lieu la palettisation de colis présentant une forme parallélépipédique rectangulaire, alors que leurs dimensions sont aléatoires.

Dans les centres de distribution, les colis arrivent habituellement sur un convoyeur qui renvoie les colis dans des bacs d'accumulation, généralement en pente, chaque bac d'accumulation étant destiné à recevoir les colis avec une destination commune.

Les colis sont reçus en vrac, mais dans la même couche, dans le bac d'accumulation en reposant avec une de ses faces sur le fond de celui-ci et sont ensuite soulevés un à un manuellement par un opérateur pour être disposés sur une palette juxtaposée. L'opérateur décide lui-même quel colis doit être le prochain à soulever du bac, et il décide l'emplacement du colis sélectionné sur la palette. L'opérateur forme un niveau de palettisation et dès qu'un niveau de palettisation ne présente aucun emplacement suffisant pour recevoir un des colis actuellement dans le bac, il passe au niveau suivant. L'opérateur commence chaque niveau de palettisation suivant par aligner les bords des premiers colis d'un niveau de palettisation en les plaçant le long des bords de la palette. Il s'agit d'une sorte de puzzle qui peut être assez stressant pour l'opérateur qui doit en même temps prendre en compte les dimensions des colis en train d'arriver et se trouvant à sa portée.

Cette palettisation est aussi un travail physique astreignant qui souvent demande de la rapidité de l'opérateur dans la prise et le déplacement d'un colis en même temps qu'il doit réfléchir pour décider quel sera le prochain colis en fonction de la place disponible sur la palette.

En outre, la hauteur de palettisation est habituellement de 2,4 m, ce qui complique la mise en place des derniers colis du niveau de palettisation le plus élevé.

On connaît de la publication US 7 266 422 un procédé de palettisation automatique de boîtes présentant des dimensions et des formes différentes. Contrairement à l'invention, US 7 266 422 ne décrit pas l'utilisaiton d'un bac d'accumulation pour colis reçus dans une même couche. Selon ce document, les boîtes arrivent dans une zone d'accumulation ou de tampon, immédiatement en amont d'une station de palettisation, parfaitement alignés les unes après les autres en étant espacées les unes des autres. La zone de tampon est accessible à un robot de préhension qui assure la palettisation. L'alignement des boîtes dans la zone d'accumulation est parallèle à l'axe longitudinal d'une palette juxtaposée. Dans ce document, l'orientation angulaire des boîtes dans la zone de tampon est ainsi prédéterminée et égale à zéro par rapport à l'axe longitudinal de la palette. Par conséquent, ce procédé de prévoit aucune prise en compte de l'orientation angulaire des boîtes. Or, le procédé selon l'invention est conçu pour la palettisation de colis qui s'accumulent en vrac, dans une même couche, dans un bac d'accumulation et dont l'orientation angulaire est arbitraire et peut varier fortement d'un colis à un autre. Ce document ne donne aucune solution à ce problème.

Une autre difficulté réside dans le fait qu'une installation de palettisation automatique à l'aide d'un robot de colis arrivés en vrac dans un bac d'accumulation a des difficultés à discerner des colis d'à peu près la même dimension qui sont disposés de manière à être tassés les uns contre les autres, ainsi que les colis portant des marques très visibles telles que bandes adhésives de couleur ou même des colis composés de deux couleurs très différentes. Ces difficultés de discernement génèrent des erreurs d'interprétation qui compliquent la gestion.

Un but de l'invention est de proposer un procédé de palettisation automatique qui remédie à tous les inconvénients des procédés manuels ou automatisés actuellement utilisés, et qui en même temps permet de gérer les priorités entre les bacs d'accumulation différents pour éviter la saturation dans certains bacs d'accumulation et éventuellement, en conséquence, l'arrêt du convoyeur.

Un autre but du procédé de palettisation selon l'invention est de permettre l'accumulation d'un grand nombre de colis par unité de surface dans le bac d'accumulation de réception pour avoir un grand choix pour la sélection du prochain colis le mieux adapté pour déplacer sur la palette tout en évitant que deux colis voisins soient conçus comme un seul par un dispositif de vision, ce qui induirait des erreurs pour la préhension ou bien laisserait tout simplement les deux colis sans considération pour la prochaine sélection d'un colis convenable à saisir pour son déplacement à un emplacement prédéterminé sur la palette.

Un objet de l'invention est un procédé de palettisation selon la revendication 1 dans lequel des colis parallélépipédiques rectangulaires sont reçus dans un bac d'accumulation à partir d'un convoyeur d'amenée des colis, les colis étant soulevés un à un du bac d'accumulation et déplacés sur une palette juxtaposée, caractérisé en ce que
- on calcule les trois dimensions de chaque colis arrivant dans le bac d'accumulation ;
- on suit à chaque instant la position et l'orientation angulaire de chaque colis à partir du moment de son entrée dans le bac d'accumulation ;
- on sélectionne à chaque instant un prochain colis à déplacer parmi les colis actuellement dans le bac d'accumulation en fonction de ses dimensions et de l'espace restant disponible à un niveau actuel de palettisation ;
- on détermine l'emplacement exact à prévoir sur la palette pour le colis sélectionné ;
- on soulève et on dépose le colis sélectionné à l'emplacement prévu sur la palette à l'aide d'une tête de préhension rotative d'un robot de manutention, en le disposant parallèlement à l'axe longitudinal ou transversal de la palette et, dans la mesure du possible, en alignant sensiblement un des côtés du colis sur un des côtés de la palette.

Selon d'autres caractéristiques de l'invention :
- immédiatement avant de soulever le colis sélectionné, on détermine l'angle formé par le colis par rapport à l'axe longitudinal ou transversal de la palette, et on calcule l'angle de rotation nécessaire à ladite tête de préhension pour lui permettre de placer le colis sélectionné sur la palette parallèlement à l'axe longitudinal ou transversal de celle-ci, et après avoir soulevé le colis sélectionné, on fait tourner ladite tête de préhension de l'angle de rotation calculé, immédiatement avant la pose du colis sélectionné sur la palette ;
- on passe à un niveau suivant de colis à chaque fois qu'au niveau actuel l'espace restant n'est pas suffisant pour recevoir un des colis actuellement dans le bac, et on ajoute des niveaux jusqu'à une hauteur prédéterminée ;
- on utilise pour commander le robot un dispositif de commande comportant un algorithme permettant de calculer à chaque instant quel colis sélectionner et son emplacement optimal sur la palette ;
- le procédé comprend en outre une phase consistant à brasser les colis après chaque préhension d'un colis par le robot de manière à changer leurs positions.
- on prend à un premier instant une première image pour identifier un certain nombre de colis sélectionnables, et après la préhension d'un colis sélectionné, on effectue un brassage des colis en suivant leur déplacement durant le brassage pour sauvegarder l'identification et la localisation des colis, on arrête le brassage à un deuxième instant et on prend une nouvelle image qui est comparée à la première afin d'identifier de nouveau les colis sélectionnables.
- on utilise le robot pour la palettisation simultanée de deux palettes à partir du même bac d'accumulation ;
- on déplace le robot pour travailler alternativement sur plusieurs bacs d'accumulation ;
- on fait descendre la palette d'un pas correspondant sensiblement à la hauteur du niveau de palettisation actuel avant de passer à un niveau de palettisation suivant de manière à maintenir une hauteur de travail du robot sensiblement constante ; et
- on abaisse la palette en la faisant passer par une ouverture prévue dans le sol.

Un autre objet de l'invention est un dispositif selon la revendication 9 de mise en oeuvre du procédé présentant les caractéristiques mentionnées, caractérisé en ce qu'il comporte un robot de manutention à tête de préhension rotative, un dispositif de commande du robot, et au moins un dispositif de vision permettant de connaître les trois dimensions de chaque colis, ainsi que sa position et son orientation angulaire lorsqu'il se trouve dans le bac.

Selon d'autres caractéristiques du dispositif selon l'invention :
- dispositif de vision comprend une caméra et un scanner laser ;
- la tête de préhension du robot porte des ventouses et que le dispositif de commande permet de placer les ventouses de façon optimale sur chaque colis sélectionné en fonction de la forme et de la dimension de la face de celui-ci tournée vers le haut.
- le dispositif comporte en outre un dispositif de brassage des colis dans le bac d'accumulation ;
- le dispositif de brassage comporte des moyens entraîneurs intégrés dans le fond du bac d'accumulation ;
- lesdits moyens entraîneurs comportent des rouleaux dont au moins certains peuvent être entraînés en rotation ; et
- lesdits moyens entraîneurs sont répartis dans plusieurs sections du bac et forment un angle d'environ 90° d'une section à une section voisine.

D'autres caractéristiques et avantages de l'invention ressortiront de la description qui va suivre en référence aux figures annexées dans lesquelles :
- la figure 1 est une vue partielle en perspective illustrant un robot en train de placer sa tête de préhension sur un colis sélectionné disposé en biais sur un bac d'accumulation d'accumulation,
- la figure 2 est une vue partielle en perspective illustrant le robot en train de disposer le colis sélectionné dans la figure 1 sur une palette ;
- figure 3 est une vue en perspective d'un dispositif de palettisation comprenant un bac d'accumulation pourvu de moyens de brassage des colis, et
- la figure 4 est une vue de dessus du dispositif de palettisation de la figure 3.

Dans les figures, les éléments identiques ou équivalents portent les mêmes signes de référence.

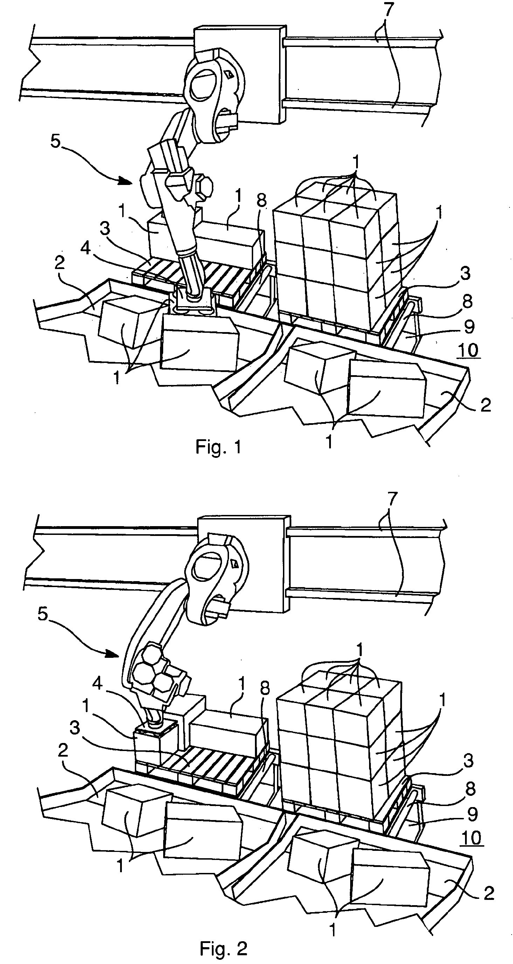

Les figures 1 et 2 sont des vues partielles d'un centre de distribution de colis 1 qui doivent être palettisés. Les figures montrent la partie inférieure de deux bacs d'accumulation en pente 2 recevant en vrac, mais dans la même couche, les colis d'un convoyeur (non représenté) disposé à l'extrémité opposée des bacs d'accumulation. Par conséquent, les colis 1 accumulés à un certain instant dans le bac présentent fréquemment une orientation différente d'un colis à un colis voisin par rapport à un axe longitudinal X-X d'une palette 3 destinée à recevoir les colis.

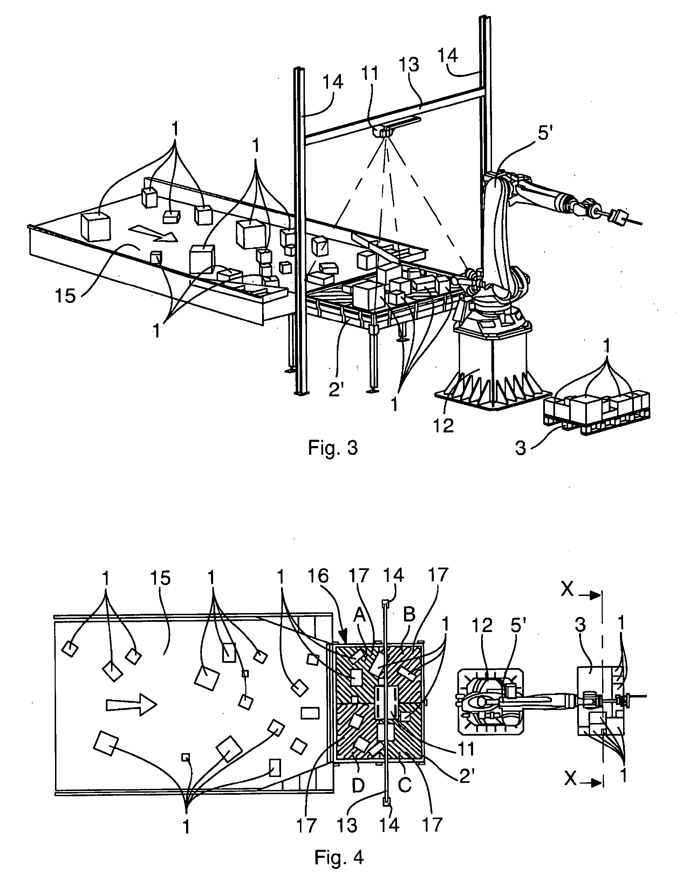

Selon l'invention, on suit à chaque instant la position et l'orientation angulaire de chaque colis 1 à partir du moment de son entrée dans le bac d'accumulation 2. Dans ce but, on utilise un dispositif de vision 11 (voir figures 3 et 4) permettant de visualiser chaque colis 1 pour par la suite calculer les trois dimensions de chaque colis 1 se trouvant dans le bac d'accumulation 2. Ce dispositif de vision comporte avantageusement au moins une caméra et au moins un scanner laser (non représenté).

En variante, un autre dispositif de visualisation permettant de calculer les trois dimensions séparément est disposé en amont du bac d'accumulation 2 de sorte que les dimensions de chaque colis soient connues avant son entrée dans le bac.

A partir des données obtenues et du calcul des dimensions de chaque colis 1, on sélectionne à chaque instant un prochain colis 1 à déplacer parmi les colis actuellement dans le bac d'accumulation 2 en fonction de ses dimensions et de l'espace restant disponible à un niveau actuel de palettisation sur la palette 3.

Simultanément, on détermine l'emplacement exact à prévoir sur la palette 3 pour le colis sélectionné 1.

Immédiatement après, on soulève et on dépose le colis 1 sélectionné à l'emplacement prévu sur la palette 3 à l'aide d'une tête de préhension 4 rotative d'un robot de manutention 5, en disposant le colis 1 parallèlement à l'axe longitudinal ou transversal de la palette 3 et, dans la mesure du possible, en alignant sensiblement un des côtés du colis 1 sur un des côtés de la palette 3.

La tête de préhension 4 du robot 5 porte des ventouses 6 pouvant être actionnées pour soulever le colis 1.

Afin d'améliorer la précision de la palettisation, on détermine, avant de soulever le colis sélectionné 1, l'angle formé par le colis par rapport à l'axe longitudinal ou transversal de la palette 3, et on calcule l'angle de rotation nécessaire à ladite tête de préhension 4 suite à la préhension du colis sélectionné 1 pour lui permettre de placer celui-ci sur la palette 3 parallèlement à l'axe longitudinal ou transversal de celle-ci. Ainsi, après avoir soulevé le colis sélectionné 1, on fait tourner la tête de préhension 4 de l'angle de rotation nécessaire calculé, immédiatement avant la pose du colis sélectionné 1 sur la palette 3. Grâce à cet agencement, l'orientation angulaire du colis 1 par la tête de préhension 4 est effectuée indépendamment de sa position de préhension dans le bac d'accumulation 2.

Les calculs sont de préférence effectués en temps masqué, c'est-à-dire lorsque le robot est en mouvement, afin de maximiser la cadence intrinsèque du robot.

Comme le dispositif de vision reste opérationnel pendant toute la palettisation et donc aussi à l'instant auquel la tête de préhension 4 entre en contact avec un colis sélectionné 1, la connaissance de la position et de l'orientation angulaire de ce colis est toujours précise.

On passe à un niveau suivant de colis 1 à chaque fois qu'au niveau actuel l'espace restant n'est pas suffisant pour recevoir un des colis 1 actuellement dans le bac d'accumulation 2, et on ajoute des niveaux jusqu'à une hauteur prédéterminée qui de préférence correspond à environ 2,4 m, ce qui est la hauteur généralement appliquée pour une disposition optimale sur un camion de transport des palettes.

Pour commander le robot 5, on utilise un dispositif de commande (non représenté) comportant un algorithme permettant de calculer à chaque instant quel colis 1 sélectionner et son emplacement optimal sur la palette 3. Cet algorithme intègre aussi les contraintes d'imbrication des colis 1 et de leur stabilité sur la palette 3, en tenant compte des colis 1 déjà placés sur la palette.

Ainsi, pour chaque nouveau colis 1 à sélectionner, le dispositif de visualisation en combinaison avec cet algorithme donne la possibilité de choisir parmi un nombre significatif de colis 1 actuellement dans le bac d'accumulation 2, ce qui améliore sensiblement la qualité de la palettisation et diminue drastiquement les situations d'impossibilité de placement d'un colis.

On peut éventuellement utiliser le robot 5 pour la palettisation simultanée de deux palettes 3, voire plus, à partir du même bac d'accumulation 2.

Le robot de manutention 5 est avantageusement monté déplaçable sur des rails afin de permettre de le déplacer pour travailler alternativement sur plusieurs bacs d'accumulation 2.

Afin de maintenir la hauteur de travail du robot 5 sensiblement constante on fait selon une caractéristique de l'invention descendre la palette 3 d'un pas correspondant sensiblement à la hauteur du niveau de palettisation actuel avant de passer à un niveau de palettisation suivant. Les figures montrent que les palettes 3 sont disposées sur un support 8 monté déplaçable en hauteur, par exemple à l'aide d'un dispositif de levage en croisillon, en descendant par une ouverture 9 effectuée dans le sol 10.

Selon une variante non illustrée sans ouverture dans le sol, le bac d'accumulation 2 se trouve placé décalé vers le haut et la palette 3 est disposée sur un support déplaçable en hauteur actionné par un dispositif de levage disposé sur le sol 10. Selon cette variante, on commence avec le support 9 dans sa position haute et on l'abaisse d'un pas pour chaque nouveau niveau de palettisation.

Cela a également pour avantage qu'un opérateur peut facilement intervenir à n'importe quel moment et à une hauteur convenable si un problème quelconque surgit.

Afin de rendre le procédé selon l'invention aussi efficace que possible, il est important de prévoir une zone de préhension du robot contenant le maximum de colis qui sont atteignables par le robot et qui se trouvent dans le champ de vision du dispositif de vision 11. Plus les possibilités de choix sont élevées, meilleures seront les résultats de la palettisation.

La forme optimale de cette zone de préhension du robot 5 est proche d'un rectangle qui peut par exemple présenter un rapport longueur / largeur entre environ 1 et 1,3.

Typiquement, vingt colis sur le bac d'accumulation est un minimum et l'efficacité de palettisation augmente de manière significative quand le nombre de colis augmente. Des simulations ont montré que cinquante colis disponibles sur le bac d'accumulation pour la palettisation permettent d'atteindre un très bon niveau de performance. Ce critère nécessite donc un dispositif de vision ayant un champ suffisamment grand et qui soit compatible avec l'envergure du robot.

Cependant, les dispositifs de vision 11 montrent leurs limites assez rapidement lorsque la densité de colis par unité de surface augmente, bien que cette augmentation de densité surfacique soit recherchée pour atteindre l'efficacité optimale de palettisation.Pour résoudre cette contradiction, le procédé selon l'invention comporte en outre une phase consistant à brasser les colis 1 qui se trouvent dans le bac d'accumulation 2 après chaque préhension d'un colis par le robot. De cette manière, on obtient un changement des positions des colis et la nouvelle configuration vue par le dispositif de vision 11 est communiquée au dispositif de commande du robot 5 pour lui permettre de discriminer ainsi des colis qui ne l'étaient pas avant le brassage.

Selon l'invention, on prend d'abord une image pour identifier un certain nombre de colis sélectionnables 1, et après chaque préhension d'un colis sélectionné, on effectue un brassage des colis pendant quelques secondes, ensuite on arrête le brassage et on prend une nouvelle image afin d'identifier de nouveau les colis sélectionnables.

Selon une variante de ce procédé, le dispositif de commande du robot peut à un premier instant T0 identifier un certain nombre de colis sélectionnables dans le bac, la sélection étant effectuée par l'algorithme de placement du dispositif de commande. Après la préhension d'un colis ainsi sélectionné, on effectue un brassage des colis qui modifie la position de l'ensemble des colis et à un deuxième instant T1, une nouvelle image des colis dans le bac sera prise pour être comparée à la position des colis dans le bac à l'instant T0. Ainsi seront identifiés et localisés les colis avant le premier brassage à l'instant T0 par un suivi de leur déplacement durant le brassage plus par la nouvelle image de la situation qui aura permit d'identifier comme « sélectionnables » des colis qui ne l'étaient pas auparavant.

Ainsi séquence après séquence il y a amélioration de la discrimination d'un certain nombre de colis, ce qui apporte une optimisation des choix possibles, avec la même densité surfacique.

Par exemple, sans brassage, deux colis de taille identique qui sont côte à côte ne sont pas facilement discernables par les dispositifs de vision et de commande et sont donc exclus des choix de préhension. Cependant, grâce au brassage des colis de la manière indiquée, statistiquement, ces deux colis ne seront plus collés l'un à l'autre et deviennent donc des colis identifiables comme « sélectionnables ».

De même dans le cas d'un colis à deux couleurs très différentes, le dispositif de commande peut avoir des difficultés à ne pas interpréter l'image fournie par le dispositif de vision comme étant deux colis. Cependant, après brassage, le dispositif de commande qui va comparer les images fournies par le dispositif de vision pourra déterminer qu'il s'agit d'un colis unique et donc potentiellement « sélectionnable ».

Les figures 3 et 4 montrent un dispositif de palettisation comportant un robot de manutention 5' qui est monté sur un socle 12, contrairement au robot 5 montré sur les figures 1 et 2 qui est suspendu à un rail 7. Le dispositif de vision 11 est suspendu au-dessus du bac d'accumulation 2' à l'aide d'une traverse 13 reliant l'un à l'autre deux longerons 14 disposés de part et d'autre du bac d'accumulation 2'.

Les colis 1 sont transportés vers le bac d'accumulation 2' par un convoyeur 15. Le bac d'accumulation 2' est globalement rectangulaire et pourvu d'un dispositif de brassage 16. Ce dispositif de brassage comporte des moyens entraîneurs 17 intégrés dans le fond du bac d'accumulation 2.

Selon une variante, les moyens entraîneurs comportent des rouleaux 17 dont au moins certains peuvent être entrainés en rotation. Les rouleaux sont disposés dans quatre sections différentes A, B, C, D du bac d'accumulation 2'. Les sections A, B, C, D sont globalement rectangulaire et de même dimension. La disposition des rouleaux 17 est décalée de 90° d'une section à la suivante.

Selon d'autres variantes non illustrées sur les figures, les moyens entraîneurs comprennent soit des courroies, soit des tapis roulants.

Pour effectuer le brassage recherché des colis 1 après la préhension d'un entre eux, le dispositif de commande actionne le dispositif de brassage pendant quelques secondes. Ensuite, le dispositif de brassage est arrêté et une nouvelle image est prise, comme cela est expliqué plus haut.

Dans un mode de réalisation non illustré sur les figures, le bac d'accumulation est circulaire et est également associé à un dispositif de brassage qui comporte des moyens de brassage sous forme de rouleaux disposés dans des sections différentes comme cela vient d'être décrit.

En outre, un dispositif de gestion (non représenté) des priorités entre plusieurs bacs d'accumulation juxtaposés assure avantageusement une optimisation de l'usage du ou des robots 5.

L'utilisation du robot de manutention 5 est ainsi très flexible et dès que le dispositif de gestion aura déterminé qu'il va y avoir un flux important dans un bac d'accumulation donné 2, le robot 5 sera déjà positionné pour le déchargement de ce bac.

Est ainsi obtenu un procédé de palettisation entièrement automatisé qui permet une palettisation rapide, précise et sécurisée.

## Revendications

1. Procédé de palettisation dans lequel des colis parallélépipédiques rectangulaires (1) sont reçus en vrac, mais dans une même couche, dans un bac d'accumulation (2) à partir d'un convoyeur d'amenée des colis, les colis (1) étant soulevés un à un du bac d'accumulation (2) et déplacés sur une palette juxtaposée (3), dans lequel
- on calcule les trois dimensions de chaque colis (1) arrivant dans le bac d'accumulation (2);
- on suit à chaque instant la position et l'orientation angulaire de chaque colis (1) par rapport à l'axe longitudinal (X-X) de la palette (3) à partir du moment de son entrée dans le bac d'accumulation (2);
- on sélectionne à chaque instant un prochain colis (1) à déplacer parmi les colis actuellement dans le bac d'accumulation (2) en fonction de ses dimensions et de l'espace restant disponible à un niveau actuel de palettisation ;
- on détermine l'emplacement exact à prévoir sur la palette (3) pour le colis sélectionné (1);
- on soulève et on dépose le colis sélectionné (1) à l'aide d'une tête de préhension rotative (14) d'un robot de manutention (5), le procédé comporte les opérations suivantes:
- on suit à chaque instant la position et l'orientation angulaire de chaque colis (1) par rapport à l'axe longitudinal (X-X) de la palette (3) à partir du moment de son entrée dans le bac d'accumulation (2);
- immédiatement avant de soulever le colis sélectionné (1), on détermine l'angle formé par le colis (1) par rapport à l'axe longitudinal ou transversal de la palette (3), et on calcule l'angle de rotation nécessaire à ladite tête de préhension (4) pour lui permettre de placer le colis sélectionné sur la palette (3) parallèlement à l'axe longitudinal ou transversal de celle-ci,
- après avoir soulevé le colis sélectionné (1), on fait tourner ladite tête de préhension (4) de l'angle de rotation calculé, immédiatement avant la pose du colis sélectionné (1) sur la palette (3) et on dépose le colis sélectionné (1) à l'emplacement prévu sur la palette (3) en le disposant parallèlement à l'axe longitudinal ou transversal de la palette (3) et, dans la mesure du possible, en alignant sensiblement un des côtés du colis (1) sur un des côtés de la palette (3).

2. Procédé de palettisation selon la revendication 1, **caractérisé en ce qu'**on passe à un niveau suivant de colis (1) sur la palette (3) à chaque fois qu'au niveau actuel l'espace restant n'est pas suffisant pour recevoir un des colis actuellement dans le bac d'accumulation (2), et on ajoute des niveaux jusqu'à une hauteur prédéterminée.

3. Procédé de palettisation selon l'une des revendications 1 ou 2, **caractérisé en ce qu'**on utilise pour commander le robot (5) un dispositif de commande comportant un algorithme permettant de calculer à chaque instant quel colis (1) sélectionner et son emplacement optimal sur la palette (3).

4. Procédé de palettisation selon l'une quelconque des revendications précédentes, **caractérisé en ce qu'**il comprend en outre une phase consistant à brasser les colis (1) après chaque préhension d'un colis par le robot (5, 5') de manière à changer leurs positions.

5. Procédé de palettisation selon la revendication 4, **caractérisé en ce qu'**on prend d'abord une image pour identifier un certain nombre de colis sélectionnables (1), et après chaque préhension d'un colis sélectionné, on effectue un brassage des colis pendant quelques secondes, ensuite on arrête le brassage et on prend une nouvelle image afin d'identifier de nouveau les colis sélectionnables.

6. Procédé de palettisation selon l'une quelconque des revendications précédentes, **caractérisé en ce qu'**on utilise le robot (5, 5') pour la palettisation simultanée de deux palettes (3) à partir du même bac d'accumulation (2).

7. Procédé de palettisation selon l'une quelconque des revendications précédentes, **caractérisé en ce qu'**on déplace le robot (5, 5') pour travailler alternativement sur plusieurs bacs d'accumulation (2).

8. Procédé de palettisation selon l'une quelconque des revendications précédentes, **caractérisé en ce qu'**on fait descendre la palette (3) d'un pas correspondant sensiblement à la hauteur du niveau de palettisation actuel avant de passer à un niveau de palettisation suivant de manière à maintenir une hauteur de travail du robot (5) sensiblement constante.

9. Dispositif de palettisation pour la mise en oeuvre du procédé selon l'une quelconque des revendications précédentes, **caractérisé en ce qu'**il comporte un robot de manutention (5) à tête de préhension rotative (4), un dispositif de commande du robot, un bac d'accumulation (2) dans lequel des colis parallélépipédiques rectangulaires (1) sont reçus en vrac, mais dans une même couche, au moins un dispositif de vision permettant de connaître les trois dimensions de chaque colis de la couche, ainsi que sa position et son orientation angulaire lorsqu'il se trouve dans le bac.

10. Dispositif selon la revendication 9, **caractérisé en ce que** le dispositif de vision comprend une caméra et un scanner laser.

11. Dispositif selon l'une des revendications 9 ou 10, **caractérisé en ce que** la tête de préhension (4) du robot (5) porte des ventouses (6) et que le dispositif de commande permet de placer les ventouses (6) de façon optimale sur chaque colis sélectionné (1) en fonction de la forme et de la dimension de la face de celui-ci tournée vers le haut.

12. Dispositif selon l'une quelconque des revendications 9 à 11, **caractérisé en ce qu'**il comporte en outre un dispositif de brassage des colis (1) dans le bac d'accumulation (2).

13. Dispositif selon la revendication 12, **caractérisé en ce que** le dispositif de brassage comporte des moyens entraîneurs intégrés dans le fond du bac d'accumulation.

14. Dispositif selon la revendication 13, **caractérisé en ce que** lesdits moyens entraîneurs comportent des rouleaux (17) dont au moins certains peuvent être entraînés en rotation.

15. Dispositif selon l'une des revendications 13 ou 14, **caractérisé en ce que** lesdits moyens entraîneurs (17) sont répartis dans plusieurs sections du bac et forment un angle d'environ 90° d'une section à une section voisine.

## Patentansprüche

1. Palettisierungsverfahren, bei welchem rechteckige parallelepipedische Pakete (1) lose, aber in einer selben Schicht von einem Paketzuführungsförderer in einem Sammelbehälter (2) empfangen werden, wobei die Pakete (1) dem Sammelbehälter (2) einzeln entnommen und auf eine danebenstehende Palette (3) verlagert werden, wobei:
- die drei Dimensionen jedes im Sammelbehälter (2) ankommenden Pakets (1) berechnet werden,
- die Position und die Winkelausrichtung jedes Pakets (1) in Bezug zur Längsachse (X-X) der Palette (3) ab dem Moment seines Eintreffens im Sammelbehälter (2) jederzeit verfolgt werden,
- jederzeit ein weiteres zu verlagerndes Paket (1) aus den sich aktuell im Sammelbehälter (2) befindenden Paketen in Abhängigkeit von seinen Abmessungen und vom restlichen verfügbaren Platz gegenüber einem aktuellen Palettisierungsstand ausgewählt wird,
- die exakte Stelle, die auf der Palette (3) für das ausgewählte Paket (1) vorzusehen ist, bestimmt wird,
- das ausgewählte Paket (1) mit Hilfe eines Rotationsgreifkopfs (14) eines Umschlagroboters (5) angehoben und abgestellt wird,
wobei das Verfahren die folgenden Schritte umfasst:
- Verfolgen der Position und der Winkelausrichtung jedes Pakets (1) in Bezug zur Längsachse (X-X) der Palette (3) ab dem Moment seines Eintreffens im Sammelbehälter (2),
- Bestimmen, unmittelbar vor dem Anheben des ausgewählten Pakets (1), des Winkels, der von dem Paket (1) in Bezug zur Längs- oder Querachse der Palette (3) gebildet wird, und Berechnen des für den Greifkopf (4) notwendigen Rotationswinkels, damit dieser imstande ist, das ausgewählte Paket auf der Palette (3) parallel zur Längs- oder Querachse derselben abzustellen,
- Drehen des Greifkopfs (4), nach dem Anheben des ausgewählten Pakets (1) unmittelbar vor dem Abstellen des ausgewählten Pakets (1) auf der Palette (3), im berechneten Rotationswinkel, und Abstellen des ausgewählten Pakets (1) an der auf der Palette (3) vorgesehenen Stelle, wobei es parallel zur Längs- oder Querachse der Palette (3) und im Rahmen des Möglichen etwa an einer der Seiten des Pakets (1) mit einer der Seiten der Palette (3) fluchtend angeordnet wird.

2. Palettisierungsverfahren nach Anspruch 1, **dadurch gekennzeichnet, dass** jedes Mal, wenn auf der aktuellen Ebene der restliche Platz nicht ausreichend ist, um eines der Pakete (1), die sich aktuell im Sammelbehälter (2) befinden, zu empfangen, ein Übergang auf eine nächste Ebene von Paketen (1) auf der Palette (3) erfolgt, und dass die Ebenen bis zu einer vorbestimmten Höhe hinzugefügt werden.

3. Palettisierungsverfahren nach einem der Ansprüche 1 oder 2, **dadurch gekennzeichnet, dass** zum Steuern des Roboters (5) eine Steuervorrichtung verwendet wird, die einen Algorithmus aufweist, der erlaubt, jederzeit zu berechnen, welches Paket (1) auszuwählen ist und seine optimale Platzierung auf der Palette (3).

4. Palettisierungsverfahren nach einem der vorangehenden Ansprüche, **dadurch gekennzeichnet, dass** es ferner eine Phase umfasst, die darin besteht, die Pakete (1) nach jedem Ergreifen eines Pakets durch den Roboter (5, 5') zu mischen, um ihre Positionen zu verändern.

5. Palettisierungsverfahren nach Anspruch 4, **dadurch gekennzeichnet, dass** zunächst ein Bild aufgenommen wird, um eine bestimmte Anzahl auswählbarer Pakete (1) zu identifizieren, und dass die Pakete nach jedem Ergreifen eines ausgewählten Pakets einige Sekunden lang gemischt werden, danach das Mischen beendet wird und ein neues Bild aufgenommen wird, um erneut die auswählbaren Pakete zu identifizieren.

6. Palettisierungsverfahren nach einem der vorangehenden Ansprüche, **dadurch gekennzeichnet, dass** der Roboter (5, 5') für die gleichzeitige Palettisierung von zwei Paletten (3) ab demselben Sammelbehälter (2) verwendet wird.

7. Palettisierungsverfahren nach einem der vorangehenden Ansprüche, **dadurch gekennzeichnet, dass** der Roboter (5, 5') verlagert wird, um abwechselnd über mehreren Sammelbehältern (2) zu arbeiten.

8. Palettisierungsverfahren nach einem der vorangehenden Ansprüche, **dadurch gekennzeichnet, dass** die Palette (3) um eine Stufe heruntergefahren wird, die etwa der Höhe der aktuellen Palettisierungsebene entspricht, bevor sie auf eine nächste Palettisierungsebene wechselt, um eine Arbeitshöhe des Roboters (5) etwa konstant zu halten.

9. Palettisierungsvorrichtung für die Umsetzung des Verfahrens nach einem der vorangehenden Ansprüche, **dadurch gekennzeichnet, dass** sie einen Umschlagroboter (5) mit Rotationsgreifkopf (4), eine Steuervorrichtung des Roboters, einen Sammelbehälter (2), in welchem rechteckige parallelepipedische Pakete (1) lose, aber in einer selben Schicht empfangen werden, mindestens eine Sichtvorrichtung, die erlaubt, die drei Dimensionen jedes Pakets der Schicht sowie seine Position und seine Winkelausrichtung zu ermitteln, wenn es sich in dem Behälter befindet, aufweist.

10. Vorrichtung nach Anspruch 9, **dadurch gekennzeichnet, dass** die Sichtvorrichtung eine Kamera und einen Laserscanner umfasst.

11. Vorrichtung nach einem der Ansprüche 9 oder 10, **dadurch gekennzeichnet, dass** der Greifkopf (4) des Roboters (5) Saugnäpfe (6) trägt und dass die Steuervorrichtung erlaubt, die Saugnäpfe (6) optimal auf jedem ausgewählten Paket (1) in Abhängigkeit von der Form und von der Größe der Seite desselben, die nach oben zeigt, zu platzieren.

12. Vorrichtung nach einem der Ansprüche 9 bis 11, **dadurch gekennzeichnet, dass** sie ferner eine Mischvorrichtung der Pakete (1) im Sammelbehälter (2) aufweist.

13. Vorrichtung nach Anspruch 12, **dadurch gekennzeichnet, dass** die Mischvorrichtung in den Boden des Sammelbehälters integrierte Antriebsmittel aufweist.

14. Vorrichtung nach Anspruch 13, **dadurch gekennzeichnet, dass** die Antriebsmittel Walzen (17) aufweisen, von denen mindestens einige rotierend antreibbar sind.

15. Vorrichtung nach Anspruch 13 oder 14, **dadurch gekennzeichnet, dass** die Antriebsmittel (17) in mehreren Abschnitten des Behälters verteilt sind und von einem Abschnitt zu einem benachbarten Abschnitt einen Winkel von zirka 90° bilden.

## Claims

1. A palletization method in which rectangular parallelepiped parcels (1) are received in bulk, but in a same layer, in an accumulation tub (2) from a parcel intake conveyor, the parcels (1) being lifted one by one from the accumulation tub (2) and moved onto an adjacent palette (3), wherein
- the three dimensions of each parcel (1) arriving in the accumulation tub (2) are calculated;
- the position and angular orientation of each parcel (1) are monitored at all times from the time it enters the accumulation tub (2) relative to the longitudinal axis (X-X) of the palette (3);
- at each moment, a next parcel (1) to be moved is selected from among the parcels currently in the accumulation tub (2) based on its dimensions and the remaining available space at a current palletization level;
- the exact location to be provided on the palette (3) is determined for the selected parcel (1);
- the selected parcel (1) is lifted and placed (1) using a rotating gripping head (14) of a handling robot (5),
the method [including] the following operations:
- at each moment, the position and the angular orientation of each parcel (1) are monitored from the moment it enters the accumulation tub (2) relative to the longitudinal axis (X-X) of the palette (3);
- immediately before lifting the selected parcel (1), the angle formed by the parcel (1) with respect to the longitudinal or transverse axis of the palette (3) is determined, and the rotation angle necessary for said gripping head (4) is calculated to allow it to place the selected parcel on the palette (3) parallel to the longitudinal or transverse axis thereof,
- after having lifted the selected parcel (1), said gripping head (4) is rotated by the calculated rotation angle, immediately before placing the selected parcel (1) on the palette (3) and the selected parcel (1) is deposited in the provided location on the palette (3) while arranging it parallel to the longitudinal or transverse axis of the palette (3) and, to the extent possible, while substantially aligning one of the sides of the parcel (1) on one of the sides of the palette (3).

2. The palletization method according to claim 1, **characterized in that** one goes to a following parcel (1) level on the palette (3) each time that, at the current level, the remaining space is not sufficient to receive one of the parcels currently in the accumulation tub (2), and levels are added up to a predetermined height.

3. The palletization method according to one of claims 1 or 2, **characterized in that** to command the robot (5), a control device is used including an algorithm making it possible to calculate, at each moment, which parcel (1) to select and its optimal location on the palette (3).

4. The palletization method according to any one of the preceding claims, **characterized in that** it further comprises a phase consisting of mixing the parcels (1) after each gripping of a parcel by the robot (5, 5') so as to change their positions.

5. The palletization method according to claim 4, **characterized in that** one first takes an image to identify a certain number of selectable parcels (1), and after each gripping of a selected parcel, the parcels are mixed for several seconds, then the mixing is stopped and a new image is taken in order to again identify the selectable parcels.

6. The palletization method according to any one of the preceding claims, **characterized in that** the robot (5, 5') is used for the simultaneous palletization of two pallets (3) from the same accumulation tub (2).

7. The palletization method according to any one of the preceding claims, **characterized in that** the robot (5, 5') is moved to work alternately on several accumulation tubs (2).

8. The palletization method according to any one of the preceding claims, **characterized in that** the palette (3) is lowered by a pitch substantially corresponding to the height of the current palletization level before going to a following palletization level so as to maintain a substantially constant working height of the robot (5).

9. A palletization device for carrying out the method according to any one of the preceding claims, **characterized in that** it includes a handling robot (5) with a rotating gripping head (4), a control device of the robot, an accumulation tub (2) in which rectangular parallelepiped parcels (1) are received in bulk, but in a same layer, at least one viewing device making it possible to determine all three dimensions of each parcel in the layer, as well as its position and its angular orientation when it is in the tub.

10. The device according to claim 9, **characterized in that** the viewing device comprises a camera and a laser scanner.

11. The device according to one of claims 9 or 10, **characterized in that** the gripping head (4) of the robot (5) has suction cups (6) and the control device makes it possible to move the suction cups (6) optimally on each selected parcel (1) as a function of the shape and dimension of the face thereof turned upward.

12. The device according to any one of claims 9 to 11, **characterized in that** it further includes a device for mixing parcels (1) in the accumulation tub (2).

13. The device according to claim 12, **characterized in that** the mixing device includes driving means integrated in the bottom of the accumulation tub.

14. The device according to claim 13, **characterized in that** said driving means include rollers (17), at least some of which can be rotated.

15. The device according to one of claims 13 or 14, **characterized in that** said driving means (17) are distributed in several sections of the tub and form an angle of about 90° from one section to an adjacent section.
